# EUROPEAN PATENT SPECIFICATION

(11) **EP 0 974 770 B1**
(45) Date of publication and mention of the grant of the patent: **14.05.2003**
(21) Application number: 98830439.0
(22) Date of filing: 21.07.1998
(51) Int. Cl.: F16G 13/06

(54) **Double strand bushing or roller drive chain with pins offset on the two strands**
Rollen- oder Hülsentreibkette mit zwei Kettengliederreihen mit versetzten Gelenkbolzen
Chaine de transmission à rouleaux ou à douilles, à deux rangées de maillons à axes décalés

(43) Date of publication of application: 26.01.2000
(73) Proprietor: Morse Tec Europe S.r.l., 20133 Milano (IT)
(72) Inventor: Merelli, Roberto, 20052 Monza (Milano) (IT); Capucci, Germinal Flavio, 20040 Carnate (Milano) (IT); Fanzani, Augusto Luigi, 20060 Gessate (Milano) (IT)
(74) Representative: Petruzziello, Aldo

(56) References cited:
- US-A- 2 450 565
- US-A- 5 192 252
- US-A- 5 507 697
- PATENT ABSTRACTS OF JAPAN vol. 014, no. 266 (M-0982), 8 June 1990 & JP 02 076944 A (DAIDO KOGYO CO LTD), 16 March 1990

## Description

The invention refers to drive transmission chains, cooperating with chain sprockets.

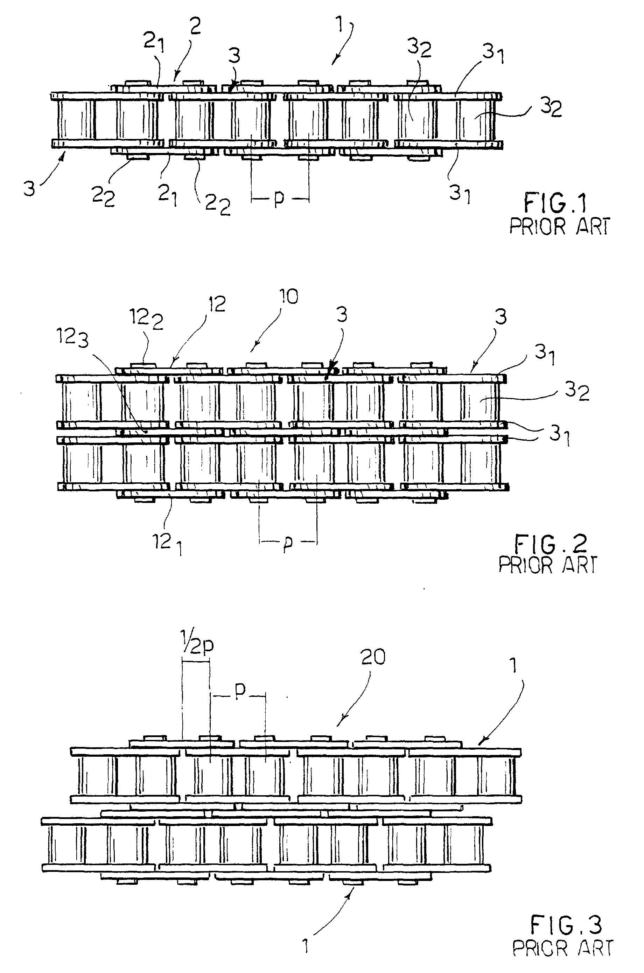

One such chain known in the art comprises a single strand consisting of a series of chain links connected to each other and pivoted one with respect to the other. Alternately, a link of the chain comprises a pair of parallel axes pins rigidly constrained to each other by outer pin connecting plates; the next link comprises a rigid so-called "block", comprising two parallel axes bushings rigidly constrained to each other by bushing link plates, generally with the same pitch between them as the pins. The bushings of a block are pivotally mounted on pins of adjacent links. An idle roller can be carried on each bushing creating a type of chain defined as a roller chain. A portion of such a chain is illustrated in Figure 1 and indicated by reference numeral 1. With reference to said figure, each pin link is indicated with reference numeral 2 and each bushing link or "block" is indicated with reference numeral 3. A pin link comprises two plates 2₁, 2₁ integral and rigid with parallel pins 2₂, 2₂. A bushing link comprises two plates 3₁, 3₁ respectively rigid with parallel axes bushings 3₂, 3₂. Each bushing link 3 connects together two successive pin links and, vice versa, each pin link connects together two successive bushing links.

In order to transmit heavy loads a chain as illustrated in Figure 2 and indicated as a whole by reference numeral 10 has long been in use. This chain comprises a series of pin links and bushing links or blocks connected one to the other. The pin links 12 have pins 12₂ double the length of those of the chain in Figure 1 and rigidly constrained to each other at their ends by means of outer plates 12₁, 12₁ and in an intermediate position by means of an intermediate plate 12₃. The bushing links or "blocks" are conventional and are indicated with 3 as in the example in Figure 1; each comprises two plates 3₁, 3₁ which rigidly constrain together two bushings 3₂, 3₂. Each pin link 12 is connected to the next one by means of two bushing links 3 located side by side on one side and the other of the intermediate plate 12₃.

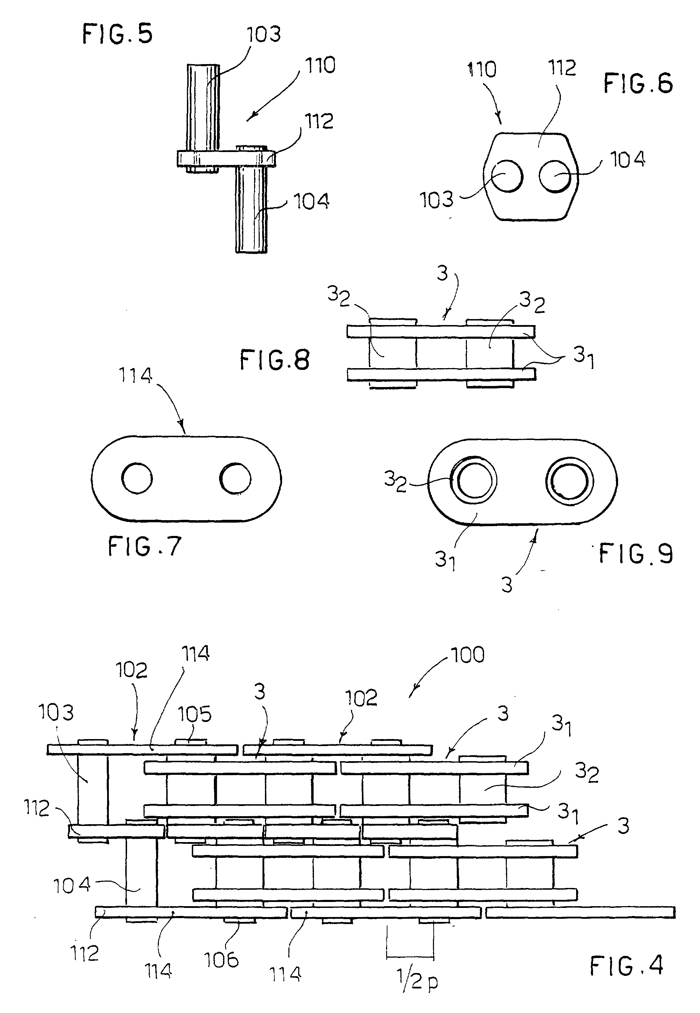

With the intention of reducing the noisiness of chains of the type illustrated in Figure 2, though maintaining the resistance thereof, use is also made of the system illustrated in Figure 3 and indicated as a whole with reference numeral 20, which is composed of two roller chains 1, 1 like that shown in Figure 1, arranged side by side and offset from each other by one-half pitch, that is to say, with the axes of the pins and of the bushings of a chain offset by about ½ p with respect to those of the adjacent chain. Such a chain system is illustrated and described in the previous United States patent No. 5.507.697 to Ledvina et al., transferred to Borg Warner Automotive Inc.

The previous Ledvina patent, though having given excellent results, nevertheless has the drawback that it is necessary to mount two separate chains, with the relative costs.

An object of the present invention is to facilitate assembly of a chain drive of the type with offset rollers. A further object is to reduce the width of the chain drive. A further object is to reduce manufacturing costs.

These objects have been achieved with a chain as stated in claim 1. Further new and advantageous features are disclosed in the subsequent claims.

The new chain comprises pin links having pins offset by a pitch fraction on one side and the other of a central plate, said pin links being linked connected to each other by bushing links or "blocks" of the conventional type.

According to an embodiment, the offset pin links comprise elements with two pins, comprising a central plate with which are integral two pins extending from opposite faces of the plate and offset one with respect to the other by one-half pitch or a fraction of a pitch.

According to another embodiment, the chain comprises pin link elements which comprise a central plate from which four pins extend projecting alternately from one face and the other of the central plate, the pins on one face and the other being offset with respect to each other by half the pitch or by a fraction of the pitch.

The new chain achieves the above mentioned objects, in particular it facilitates production and assembly and allows the size to be reduced transversally to the direction of travel of the chain.

Exemplary unrestrictive embodiments of the chain will be described below with reference to the accompanying drawings in which:
Figure 1 illustrates a portion of chain of the prior art;
Figure 2 illustrates a portion of double chain according to the state of the art;
Figure 3 illustrates two side by side chains offset by one-half pitch, according to the state of the art;
Figure 4 is a side view of a portion of chain according to the present invention in one embodiment;
Figure 5 illustrates a pin element of the chain in Figure 4;
Figure 6 is a plan view of the element in Figure 5;
Figure 7 is a plan view of an outer plate of the chain in Figure 4;
Figures 8 and 9 are an elevational view and a plan view, respectively, of a conventional block or link also used for the chain in Figure 4;
Figure 10 illustrates a side view with parts removed of a portion of chain of the invention according to a variant;
Figure 11 illustrates the chain of Figure 10 in an exploded side view;
Figures 1, 2, and 3 have been explained previously with reference to the description of the state of the art.

The new chain in Figure 4 is indicated as a whole with reference numeral 100.

The chain 100 comprises pin links 102 and bushing links consisting of traditional "blocks" bearing reference numeral 3, similar to those described with reference to the prior art. Each link 102 is composed of four pins indicated respectively with 103, 104, 105 and 106, with parallel axes, disposed with their axes offset from each other by one-half pitch on one side and the other, whilst the pins on the same side have their axes offset by one pitch p. The offset pins are constrained together in pairs and form elements like that indicated by 110 in Figure 5, which provides pins 103 and 104 protruding from opposite sides of a central plate 112. The links are closed at their end by means of side or outer plates 114 like the one illustrated in Figure 7.

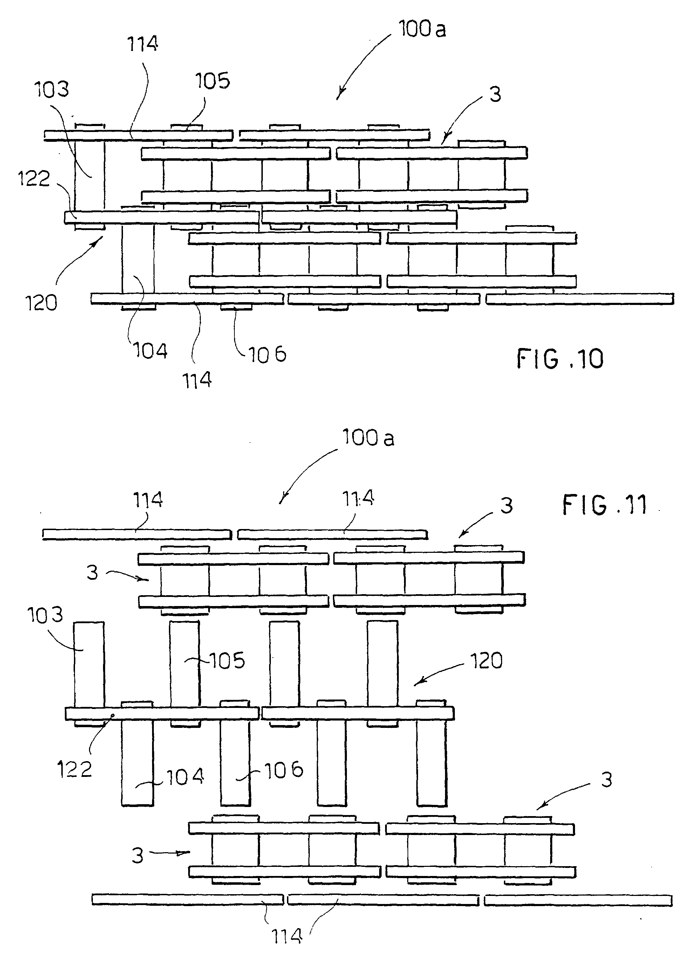

Alternatively, in the embodiment illustrated in Figures 10 and 11 a chain 100a of the invention is assembled from pin elements 120, each of which comprises a central plate 122 from which four pins 103, 104, 105 and 106 extend, arranged alternately and protruding from the opposite faces of the plate 122, two adjacent pins being offset by half a pitch and protruding from opposite faces of the plate, two pins on a single face are offset by a pitch. Conventional bushing links or block links 3 are assembled on the central or pin elements 120 thus described, and arranged so as to join the pins of adjacent elements 120, for example, in Figure 11, the pin 105 of an element 120 on the left with the pin 103 of element 120 on the right.

The chain is then closed by application of outer plates 114 that connect two pins of each pin element, for example 104, 106 and/or 103, 105.

Obviously, although only embodiments in which the pins of a pin element are offset or spaced from each other one-half pitch are described, chains comprising pin elements that have pins offset from each other by a different fraction of a pitch are understood as being included within the scope of the present invention.

The chain of the invention can be made up in two basic types: as a "bushing" chain (that is with the block links composed solely of bushing and inner bushing plates) and as a "roller" chain (with the addition of an idle roller on each bushing).

## Claims

1. A drive transmission chain (100) comprising pin links (102) having pins (103, 105) spaced out by a pitch and connected to each other by means of pin link plates, and bushing links (3) or block links having bushings spaced out from each other and rigidly connected to each other by bushing link plates (3₁), two successive pin links being connected to each other by means of a block link having the bushings (3₂) pivotally mounted on pins
**characterized in that**
at least one of said pin links (102) comprises a central plate (112) provided with protruding pins on one face and the other of the central plate and offset from each other by a fraction of the pitch.

2. A chain according to claim 1, **characterized in that** said central plate (112) carries two pins (103, 104) offset from each other by half a pitch and respectively protruding on one face and the other of the plate.

3. A chain according to claim 1, **characterized in that** said central plate (122) has four pins (103, 104,105, 106) of which two (103, 105) protrude from one face of the plate and at a distance of one pitch from each other and the other two (104, 106) protrude from the other face of the plate at a distance of one pitch from each other, the pins on one face and the other being offset by half a pitch.

4. A chain according to claim 1, in which the bushing links consist of conventional blocks comprising two bushings, spaced from each other by one pitch, rigidly constrained to two plates.

## Patentansprüche

1. Antriebskette (100), die Bolzenglieder (102) aufweist, mit Bolzen (103, 105) im Abstand von einer Teilung und durch Platten miteinander verbunden sowie Buchsenglieder (3) oder Blockglieder, deren Buchsen voneinander entfernt sind und durch Buchsengliedplatten (3₁) miteinander steif verbunden sind sowie zwei nachfolgende Bolzenglieder, die miteinander durch ein Block glied verbunden sind, bei dem die Buchsen (3₂) auf Bolzen drehbar montiert sind, **dadurch gekennzeichnet, dass** mindestens eines der Bolzenglieder (102) eine zentrale Platte (112) aufweist, die mit vorspringenden Bolzen auf der einen und anderen Seitenfläche der zentralen Platte versehen sind und gegeneinander um einen Bruchteil der Teilung versetzt sind.

2. Kette nach Anspruch 1, **dadurch gekennzeichnet, dass** die zentrale Platte (112) zwei Bolzen (103, 104) aufweist, die gegeneinander um eine halbe Teilung versetzt sind und entsprechend jeweils auf der einen bzw. anderen Seitenfläche der Platte vorspringen.

3. Kette nach Anspruch 1, **dadurch gekennzeichnet, dass** die zentrale Platte (122) vier Bolzen (103, 104, 105, 106) aufweist, von denen zwei (103, 105) auf der einen Seite der Platte, jeweils im Abstand einer Teilung zueinander, vorspringen und die anderen beiden (104, 106) auf der anderen Seitenfläche der Platte, jeweils im Abstand einer Teilung zueinander, vorspringen, da die Bolzen auf der einen und anderen Seitenfläche um eine halbe Teilung versetzt sind.

4. Kette nach Anspruch 1, bei der die Buchsenglieder aus traditionellen Blöcken bestehen, die zwei Buchsen aufweisen, die im Abstand einer Teilung zueinander angeordnet und steif an zwei Platten befestigt sind.

## Revendications

1. Chaîne de transmission du mouvement (100), comprenant des mailles à tourillons (102) ayant des tourillons (103, 105) espacés d'un pas et reliés entre eux à l'aide de plaques pour mailles à tourillons, et des mailles à douilles (3) ou des mailles à blocs ayant des douilles espacées les unes des autres et reliées de façon rigide les unes aux autres par des plaques pour mailles à douilles (3₁), deux mailles à tourillons suivantes étant reliées l'une à l'autre par une maille à bloc ayant les douilles (3₂) montées de façon pivotante sur des tourillons
**caractérisée en ce que**
au moins une desdites mailles à tourillons (102) comprend une plaque centrale (112) pourvue de tourillons saillants sur une face et sur l'autre de la plaque centrale et décentrés l'un par rapport à l'autre d'une fraction de pas.

2. Chaîne selon la revendication 1, **caractérisée en ce que** ladite plaque centrale (112) porte deux tourillons (103, 104) décentrés l'un par rapport à l'autre d'un demi-pas et saillants respectivement sur une face et sur l'autre de la plaque.

3. Chaîne selon la revendication 1, **caractérisée en ce que** ladite plaque centrale (122) présente quatre tourillons (103, 104, 105, 106), dont deux (103, 105) sortent d'une face de la plaque et à une distance d'un pas l'un de l'autre et les deux autres (104, 106) sortent de l'autre face de la plaque à une distance d'un pas l'un de l'autre, les tourillons sur une face et sur l'autre étant décentrés d'un demi-pas.

4. Chaîne selon la revendication 1, où les mailles à douilles sont constituées de blocs traditionnels comprenant deux douilles, espacées l'une de l'autre d'un pas, reliées de façon rigide à deux plaques.
